# EUROPÄISCHE PATENTSCHRIFT

(11) **EP 3 884 566 B1**
(45) Veröffentlichungstag und Bekanntmachung des Hinweises auf die Patenterteilung: **17.09.2025**
(21) Anmeldenummer: 19805667.3
(22) Anmeldetag: 18.11.2019
(51) Int. Cl.: H02K 3/22, H02K 15/12, H02K 15/00, H02K 9/193, H02K 9/00, H02K 3/50, H02K 3/38, H02K 15/38

(54) **ELEKTRISCHE MASCHINE MIT MEHREREN ALS HOHLLEITER AUSGEBILDETEN STARREN WICKLUNGSSTÜCKEN**
ELECTRIC MACHINE HAVING MULTIPLE RIGID WINDING PIECES IN THE FORM OF HOLLOW CONDUCTORS
MACHINE ÉLECTRIQUE POURVUE DE PLUSIEURS ÉLÉMENTS D'ENROULEMENT RIGIDES SOUS LA FORME DE GUIDES D'ONDES

(30) Priorität: 20.11.2018 DE 102018129229
(43) Veröffentlichungstag der Anmeldung: 29.09.2021
(73) Patentinhaber: Dynamic E Flow GmbH, 83626 Valley (DE)
(72) Erfinder: NADERER, Michael, 5020 Salzburg (AT); SCHWEINERT, Nikolaus, 87600 Kaufbeuren (DE); HARTONG, Manuel, 87600 Kaufbeuren (DE)
(74) Vertreter: Keilitz & Partner Patentanwälte PartGmbB
(86) Internationale Anmeldenummer: PCT/EP2019/081687
(87) Internationale Veröffentlichungsnummer: WO 2020/104393

(56) Entgegenhaltungen:
- DE-A1- 1 913 219
- DE-A1- 2 416 965
- DE-B- 1 089 057
- GB-A- 1 179 553
- US-A- 5 875 539

## Beschreibung

Die Erfindung betrifft eine elektrische Maschine mit einem Läufer, einem Stator und mehreren als Hohlleiter ausgebildeten Wicklungsstücken, die verschiedene Spulen einer Wicklung der elektrischen Maschine bilden und jeweils Teil eines Kühlkreislaufs der elektrischen Maschine sind.

### HINTERGRUND DER ERFINDUNG

Aus dem Stand der Technik sind innengekühlte elektrische Maschinen bekannt, deren Wicklung in der sogenannten Pin- oder Hairpin-Technologie hergestellt ist. Pins oder Hairpins sind meist aus Kupfer hergestellte, starre Wicklungsstücke, die in Nuten des Stators der elektrischen Maschine eingesetzt werden und die im Betrieb der elektrischen Maschine ein magnetisches Feld erzeugen. Bei innengekühlten elektrischen Maschinen sind die Wicklungsstücke als Hohlleiter ausgebildet, die einen durchgehenden Kanal umfassen, durch den ein Kühlmittel geleitet wird, um die elektrische Maschine zu kühlen.

Aus dem Stand der Technik bekannte starre Wicklungsstücke haben meist die Form von Haarnadeln oder Stäben. Bekannte Haarnadeln umfassen beispielsweise zwei im Wesentlichen parallel verlaufende Schenkel und einen gekrümmten Übergangsbereich, der die beiden Schenkel miteinander verbindet. An ihrer Außenfläche sind die bekannten Wicklungsstücke in der Regel mit einer elektrisch isolierenden Schicht versehen.

Die DE 195 02 308 A1 zeigt beispielsweise eine elektrische Maschine mit einem Läufer, einem Stator und mehreren als Hohlleiter ausgebildeten Wicklungsstücken. Außerdem ist ein hydraulisches Anschlussteil mit Anschlüssen für eine Vielzahl von Wicklungsstücken vorgesehen, an denen die Endabschnitte der Wicklungsstücke hydraulisch angeschlossen sind, sowie eine Dichtung, die mehrere Durchlässe aufweist, in denen jeweils ein Endabschnitt eines der Wicklungsstücke angeordnet ist. Das in der DE 195 02 308 A1 gezeigte Anschlussteil ermöglicht aber nur den gleichzeitigen hydraulischen Anschluss aller Wicklungsstücke an denselben Kühlmittelkreislauf. Außerdem ist das Anschlussteil relativ schwierig abzudichten. Weitere elektrische Maschine mit einer innengekühlten Wicklung sind aus der WO 2018/ 033 307 A1 und der DE 696 06 967 T2 bekannt.

Die DE 19 13 219 A1 beschreibt ferner eine elektrische Maschine mit einer Hohlleiterwicklung und einer speziellen Anschlussvorrichtung, an der die Enden der Hohlleiter hydraulisch angeschlossen sind. Die Anschlussvorrichtung umfasst ein hydraulisches Anschlussteil und eine Dichtung, durch die die Endabschnitte der Holleiter hindurchgeführt sind. Weitere elektrische Maschinen mit einer innengekühlten Hohlleiterwicklung und einer Anschlussvorrichtung zum hydraulischen Anschließen der Hohlleiter sind aus der US 5 875 539 A, der DE 24 16 965 A1 sowie der DE 10 89 057 B bekannt.

Bei derartigen elektrischen Maschinen mit einer aus starren Wicklungsstücken gebildeten Hohlleiterwicklung kann der hydraulische Anschluss der einzelnen Wicklungsstücke weiter vereinfacht werden.

### AUFGABE DER ERFINDUNG

Es ist daher eine Aufgabe der vorliegenden Erfindung, eine elektrische Maschine mit einer aus mehreren starren Wicklungsstücken gebildeten Hohlleiterwicklung zu schaffen, die insbesondere in Bezug auf den hydraulischen Anschluss der einzelnen Wicklungsstücke besonders einfach aufgebaut ist.

Gelöst wird diese Aufgabe gemäß der Erfindung durch die im unabhängigen Anspruch 1 genannten Merkmale. Weitere Ausführungsformen der Erfindung ergeben sich aus den Unteransprüchen.

Gemäß der Erfindung wird eine elektrische Maschine vorgeschlagen, die einen Läufer, einen Stator, mehrere externe Phasenanschlüsse und mehrere als Hohlleiter ausgebildete Wicklungsstücke umfasst, die verschiedene Spulen einer Wicklung der elektrischen Maschine bilden und jeweils Teil eines Kühlkreislaufs der elektrischen Maschine sind. Die erfindungsgemäße elektrische Maschine umfasst ferner ein hydraulisches Anschlussteil mit Anschlüssen für eine Vielzahl von Wicklungsstücken, an denen die Endabschnitte der Wicklungsstücke hydraulisch angeschlossen sind, sowie eine Dichtung, die mehrere Durchlässe aufweist, in denen jeweils ein Endabschnitt eines der Wicklungsstücke angeordnet ist, wobei das hydraulische Anschlussteil und die Dichtung gegenüberliegende Flächen aufweisen, die aufeinander liegen bzw. gegeneinander gepresst werden, um eine Abdichtung der einzelnen Anschlüsse der Wicklungsstücke am hydraulischen Anschlussteil zu gewährleisten.

Die erfindungsgemäße elektrische Maschine umfasst vorzugsweise Befestigungsmittel, um das hydraulische Anschlussteil und die Dichtung fest gegeneinander zu pressen. Die Befestigungsmittel können z. B. eine oder mehrere Schrauben umfassen. Die Dichtung und das hydraulische Anschlussteil haben vorzugsweise jeweils eine Dichtfläche, die in Axialrichtung der elektrischen Maschine zeigt. Die beiden Elemente werden in diesem Fall in Axialrichtung gegeneinandergepresst, um den hydraulischen Anschluss der Wicklungsstücke abzudichten.

Das hydraulische Anschlussteil ist ringförmig als hydraulischer Anschlussring ausgebildet. Dadurch kann es um den Läufer herum angeordnet sein, wodurch die elektrische Maschine besonders kompakt wird. Die Dichtung ist ebenfalls ein ringförmiges Element.

Gemäß einer bevorzugten Ausführungsform der Erfindung ist das hydraulische Anschlussteil derart ausgelegt, dass Wicklungsstücke von Spulen, die unterschiedlichen elektrischen Phasen (U, V, W) zugeordnet sind, elektrisch voneinander isoliert sind. Am hydraulischen Anschlussteil können somit Wicklungsstücke verschiedener elektrischer Phasen angeschlossen werden.

Die einzelnen Anschlüsse des hydraulischen Anschlussteils können entweder zur Aufnahme eines einzigen oder für mehrere Wicklungsstücke ausgelegt sein.

Erfindungsgemäß umfasst das hydraulische Anschlussteil wenigstens einen umlaufenden Kanal, der mit mehreren der Wicklungsstücke fluidtechnisch in Verbindung steht und über den ein Kühlmittel in die einzelnen Wicklungsstücke eingespeist oder ein aus den Wicklungsstücken austretendes Kühlmittel gesammelt werden kann.

Der wenigstens eine im Anschlussteil vorgesehene Kanal ist als eine in Umfangsrichtung umlaufende Nut ausgebildet. Die Nut ist vorzugsweise in Richtung der Dichtung offen und wird im zusammengebauten Zustand von der Dichtung abgedeckt.

Das hydraulische Anschlussteil ist vorzugsweise derart ausgelegt, dass sämtliche Wicklungsstücke hydraulisch parallelgeschaltet sind.

Das hydraulische Anschlussteil kann beispielsweise aus Kunststoff, aber auch aus Metall hergestellt sein. Zur elektrischen Isolierung der angeschlossenen Wicklungsstücke gegenüber dem hydraulischen Anschlussteil können z. B. elektrische Isolationselemente vorgesehen sein.

Gemäß einer bevorzugten Ausführungsform der Erfindung erfolgt die elektrische Isolierung dadurch, dass die Enden der starren Wicklungsstücke im Abstand zum hydraulischen Anschlussteil angeordnet sind und somit ein Freiraum zwischen jedem Wicklungsstück und dem hydraulischen Anschlussteil verbleibt. Ein zusätzlicher Isolator ist in diesem Fall nicht erforderlich, könnte aber dennoch vorgesehen werden.

Der genannte Freiraum kann beispielsweise dadurch geschaffen werden, dass die im hydraulischen Anschlussteil vorgesehenen Anschlussöffnungen einen größeren Querschnitt aufweisen als die Endabschnitte der einzelnen Wicklungsstücke. Die Endabschnitte der Wicklungsstücke ragen dann in den jeweiligen Anschluss hinein, ohne das hydraulische Anschlussteil zu berühren. Die einzelnen Wicklungsstücke können alternativ aber auch so angeordnet sein, dass sie mit einem axialen Abstand zum hydraulischen Anschlussteil enden.

Gemäß einer bevorzugten Ausführungsform der Erfindung ist die Dichtung aus einer Vergussmasse hergestellt, die in einem teilassemblierten Zustand der elektrischen Maschine in einen Raum, in dem die Endabschnitte der Wicklungsstücke angeordnet sind, hineingegossen wird und die sich dann um die Endabschnitte herum verteilt und aushärtet. Die Endabschnitte der einzelnen Wicklungsstücke verlaufen in diesem Fall vorzugsweise durch die Dichtung hindurch und ragen in Richtung des hydraulischen Anschlussteils hervor. Das hydraulische Anschlussteil kann nun auf die Endabschnitte aufgesetzt werden. Im zusammengebauten Zustand liegen die gegenüberliegenden Seiten der Dichtung und des hydraulischen Anschlussteils fest aufeinander, wodurch eine Abdichtung der hydraulischen Anschlüsse der Wicklungsstücke am hydraulischen Anschlussteil gewährleistet wird.

Die einzelnen Wicklungsstücke sind an ihren stirnseitigen Enden vorzugsweise offen, so dass das Kühlmittel an einem der Enden eingespeist und am anderen Ende ausgeführt wird.

Die Endabschnitte der einzelnen Wicklungsstücke sind bei einer erfindungsgemäßen elektrischen Maschine vorzugsweise in mehreren Reihen mit unterschiedlichen Radien angeordnet. Sie enden vorzugsweise etwa auf gleicher axialer Höhe, d.h. in einer axialen Ebene. Die elektrische Maschine lässt sich dadurch besonders einfach zusammenbauen.

Das vorstehend genannte hydraulische Anschlussteil umfasst vorzugsweise mehrere umlaufende Kanäle zum Verteilen oder Sammeln von Kühlmittel in bzw. aus den einzelnen Wicklungsstücken. Wenigstens einer dieser Kanäle ist vorzugsweise derart ausgebildet, dass er mit wenigstens zwei Reihen der Endabschnitte der Wicklungsstücke fluidtechnisch kommuniziert.

Die Endabschnitte der einzelnen Wicklungsstücke sind vorzugsweise so angeordnet, dass sie durch die Dichtung hindurch verlaufen, wobei sie in Richtung des hydraulischen Anschlussteils vorragen und jeweils in eine Anschlussöffnung des hydraulischen Anschlussteils eintauchen. Ein Anschluss bzw. eine Anschlussöffnung kann dabei zur Aufnahme eines einzigen oder mehrerer Endabschnitte von Wicklungsstücken ausgelegt sein.

Ferner sind die in der Dichtung vorgesehenen Durchlässe vorzugsweise so ausgelegt, dass die Endabschnitte der Wicklungsstücke dicht darin aufgenommen werden.

Die Endabschnitte der Wicklungsstücke können auch in der Dichtung oder im hydraulischen Anschlussteil verklebt sein.

Offenbart wird auch ein Verfahren zum hydraulischen Anschließen mehrerer als Hohlleiter ausgebildeter starrer Wicklungsstücke einer elektrischen Maschine an ein hydraulisches Anschlussteil, das mehrere Anschlüsse für Endabschnitte der Wicklungsstücke aufweist, wobei das Verfahren folgende Schritte umfasst: Anordnen der Endabschnitte in einem Raum, Ausgießen des Raums mit einer Vergussmasse, das die Endabschnitte der Wicklungsstücke umströmt und nach einiger Zeit aushärtet und eine Dichtung bildet, wobei die Menge der Vergussmasse so bemessen ist, dass die Endabschnitte aus der Dichtung herausragen, und Aufsetzen des hydraulischen Anschlussteils auf die Dichtung, so dass die überstehenden Endabschnitte in die Anschlussöffnungen des hydraulischen Anschlussteils eintauchen und dass gegenüberliegende Flächen des hydraulischen Anschlussteils und der Dichtung gegeneinandergedrückt werden, um die hydraulischen Anschlüsse der Wicklungsstücke abzudichten.

Gegebenenfalls kann zwischen das hydraulische Anschlussteil und die Dichtung eine weitere Dichtung eingesetzt werden.

Eine erfindungsgemäße elektrische Maschine umfasst vorzugsweise auch mehrere Kontaktringe, die dazu ausgelegt sind, jeweils mehrere der Wicklungsstücke mit einem der externen Phasenanschlüsse elektrisch zu verbinden. Mit Hilfe der vorstehend genannten Kontaktringe ist es besonders einfach möglich, die betreffenden Anschlüsse der Spulen bzw. Wicklungsstücke zu kontaktieren und mit dem jeweils zugehörigen externen Phasenanschluss zu verbinden. Dies ist insbesondere bei solchen elektrischen Maschinen von Vorteil, die pro Phase (U, V, W) mehrere parallel geschaltete Spulen aufweisen, d. h. bei denen jeder elektrischen Phase bzw. jedem externen Phasenanschluss mehrere parallel geschaltete Spulen zugeordnet sind.

Gemäß einer bevorzugten Ausführungsform der Erfindung umfasst ein Kontaktring mehrere Anschlüsse zum elektrischen Kontaktieren von Wicklungsstücken, wobei diese Anschlüsse über den Umfang des Kontaktrings vorzugsweise gleichmäßig verteilt sind.

Gemäß einer bevorzugten Ausführungsform der Erfindung umfasst die elektrische Maschine auch einen Satz aus mehreren Verteilerelementen, von denen jeweils eines mit einem der zugehörigen externen Phasenanschlüsse elektrisch in Verbindung steht.

Jedes der Verteilerelemente ist vorzugsweise über mehrere elektrische Verbindungselemente mit einem der zuvor genannten Kontaktringe elektrisch verbunden. Eine solche elektrische Maschine umfasst in diesem Fall: einen Satz Verteilerelemente, die den über die externen Phasenanschlüssen fließenden Strom jeweils auf mehrere elektrische Verbindungselemente verteilen, die genannten elektrischen Verbindungselemente, welche die Verteilerelemente und die Kontaktringe elektrisch verbinden, und die genannten Kontaktringe, die jeweils eine vorgegebene Anzahl von parallel geschalteten Spulen kontaktieren. Ausgehend von den externen Phasenanschlüssen (L1, L2, L3) führt der Strompfad in diesem Fall über jeweils ein Verteilerelement, mehrere elektrische Verbindungselemente und jeweils einen der Kontaktringe zu den Spulen der Wicklung und dann weiter zu einem Referenzpotential (z. B. dem Nullpunkt oder einer anderen Phase).

Die genannten elektrischen Verbindungselemente können beispielsweise als stabförmige Elemente ausgebildet sind. Die Verbindungselemente verlaufen vorzugsweise etwa in Axialrichtung der elektrischen Maschine. Sie sind außerdem vorzugsweise gleichmäßig über den Umfang der elektrischen Maschine verteilt angeordnet.

Die einzelnen Verteilerelemente haben vorzugsweise unterschiedliche Durchmesser, wodurch die Konstruktion der elektrischen Beschaltung vereinfacht wird. Die Verteilerelemente sind vorzugsweise ringförmig als Verteilerringe ausgeführt.

Die Kontakt- und/oder Verteilerelemente sind vorzugsweise in Axialrichtung der elektrischen Maschine nebeneinander angeordnet.

Ein als Hohlleiter ausgebildetes Wicklungsstück kann gemäß der Erfindung beispielsweise die Form eines Stabes aufweisen. Gemäß einer anderen Ausführungsform der Erfindung hat ein Wicklungsstück die Form einer Haarnadel, wobei das Wicklungsstück zwei Schenkel und einen gekrümmten Übergangsbereich umfasst, der die beiden Schenkel miteinander verbindet. Die beiden Schenkel sind im Wesentlichen parallel angeordnet und haben vorzugsweise jeweils ein Profil, das an den Querschnitt der zugehörigen Nut im Stator angepasst ist. Ein erfindungsgemäßes Wicklungsstück kann prinzipiell so dimensioniert sein, dass es eine Nut alleine oder zusammen mit einem oder mehreren weiteren Wicklungsstücken ausfüllt.

Ein erfindungsgemäßes Wicklungsstück ist vorzugsweise aus Kupfer, Aluminium oder einer Legierung eines der genannten Materialien hergestellt. An seiner Außenfläche ist vorzugsweise eine elektrisch isolierende Schicht vorgesehen.

Die einzelnen Spulen der Wicklung sind vorzugsweise aus mehreren starren Wicklungsstücken gebildet, die elektrisch in Serie geschaltet sind.

Die vorstehend genannten Verteilerelemente, die Kontaktringe als auch die zwischen den Verteilerelementen und den Kontaktringen angeordneten elektrischen Verbindungselemente müssen gegebenenfalls sehr hohe Stromdichten führen. Um die Kühlung der genannten Bauelemente zu verbessern, ist es gemäß einer speziellen Ausführungsform der Erfindung vorgesehen, neben der Wicklung auch die Verteilerelemente und/oder die Kontaktringe und/oder die Verbindungselemente als Hohlleiter auszubilden, so dass ein Kühlmittel durch die genannten Bauelemente geleitet werden kann. Die Verteilerelemente, die Kontaktringe und/oder die Verbindungselemente bilden damit selbst einen Teil des Kühlkreislaufs der elektrischen Maschine, wodurch diese besonders effektiv gekühlt werden kann.

Alternativ zur vorstehend beschriebenen Innenkühlung können die genannten Bauelemente auch von außen gekühlt werden. So können die Bauelemente beispielsweise in einer oder mehreren Kammern angeordnet sein, durch die ein Kühlmittel geleitet wird.

Grundsätzlich kann jedes thermisch stark beanspruchte Bauelement durch eine entsprechende Führung bzw. Auslegung des Kühlmittelpfades gekühlt werden. Bei einer Konstruktion als Hohlleiter können die einzelnen Bauelemente von innen gekühlt werden. Alternativ kann das Kühlmittel auch außen vorbei geleitet werden, um das betreffende Bauelement zu kühlen. Die Art und Weise der Kühlung ergibt sich aus den technischen Anforderungen und kann vom Fachmann durch praktische Überlegungen einfach umgesetzt werden.

Gemäß einer bevorzugten Ausführungsform der Erfindung haben die Kontaktringe jeweils mehrere Arme, an denen jeweils wenigstens eines der Wicklungsstücke elektrisch kontaktiert wird.

Die eingangs genannten Kontaktringe können, wie erwähnt, aus massivem Metall hergestellt sein. Gemäß einer anderen Ausführungsform der Erfindung sind die Kontaktringe aus einem Leiterplattenmaterial hergestellt, das Leiterbahnen umfasst, die einzelne Wicklungsstücke elektrisch kontaktieren.

Dieselben oder ggf. auch andere Leiterplatten können außerdem dazu vorgesehen sein, mehrere Wicklungsstücke elektrisch in Serie schalten, um die Spulen der elektrischen Wicklung zu bilden.

Eine erfindungsgemäße elektrische Maschine kann auch wenigstens eine Kontaktscheibe haben, die mehrere Durchgangsöffnungen aufweist, durch die die einzelnen Wicklungsstücke hindurch gesteckt sind, wobei die Kontaktscheibe ferner elektrische Verbinder umfasst, über die bestimmte Wicklungsstücke elektrisch in Serie geschaltet werden, um die Spulen der elektrischen Wicklung zu bilden.

Der elektrische und hydraulische Anschluss der einzelnen Wicklungsstücke erfolgt vorzugsweise nur auf einer Seite der elektrischen Maschine. Im Falle von stabförmigen Wicklungsstücken kann der elektrische und/oder hydraulische Anschluss der einzelnen Wicklungsstücke aber auch auf zwei Seiten der elektrischen Maschine erfolgen.

Gemäß einer bevorzugten Ausführungsform der Erfindung sind die Endabschnitte der einzelnen Wicklungsstücke vorzugsweise in mehreren, insbesondere kreisförmigen, Reihen angeordnet. Die Endabschnitte sind dabei vorzugsweise parallel angeordnet und zeigen vorzugsweise alle in Axialrichtung der elektrischen Maschine. Die Endabschnitte enden vorzugsweise etwa auf gleicher axialer Höhe, d.h. etwa in derselben Ebene. Dadurch wird der elektrische und hydraulische Anschluss der Wicklungsstücke wesentlich vereinfacht.

Die Kontaktringe und/oder die Verteilerelemente sind vorzugsweise scheibenförmig ausgeführt.

### KURZE BESCHREIBUNG DER ZEICHNUNGEN

Die Erfindung wird nachstehend anhand der beigefügten Zeichnung beispielhaft näher erläutert. Es zeigen:
Fig. 1 eine Schnittansicht einer elektrischen Maschine mit massiven Kontaktringen aus Metall gemäß einer ersten Ausführungsform der Erfindung;
Fig. 2 eine perspektivische Ansicht eines Wicklungsstücks einer elektrischen Maschine in Form einer Haarnadel;
Fig. 3a, 3b verschiedene Ansichten einer Anordnung aus mehreren Verteilerelementen zum Aufteilen des an den externen Phasenanschlüssen eingespeisten Stroms;
Fig. 4a bis 4c Kontaktringe der einzelnen Phasen einer erfindungsgemäßen elektrischen Maschine;
Fig. 5 eine zusammengesetzte Kontaktring-Anordnung der Kontaktringe der Fig. 4a - 4c;
Fig. 6a, 6b verschiedene Ansichten eines hydraulischen Anschlussteils gemäß einer ersten Ausführungsform der Erfindung;
Fig. 7 eine Schnittansicht eines hydraulischen Anschlussteils und einer Dichtung gemäß einer speziellen Ausführungsform der Erfindung;
Fig. 8 eine Schnittansicht einer elektrischen Maschine mit elektrischen Kontaktringen in Form von Leiterplatten gemäß einer zweiten Ausführungsform der Erfindung;
Fig. 9a - 9d verschiedene Leiterplatten einer elektrischen Maschine, die als Kontaktringe zum elektrischen Kontaktieren bestimmter Wicklungsstücke der Wicklung der elektrischen Maschine dienen; und
Fig. 10 eine perspektivische Ansicht einer elektrischen Kontaktanordnung, umfassend die Verteilerelemente der Fig. 3a, 3b sowie die in den Figuren 8a - 8d gezeigten Leiterplatten.

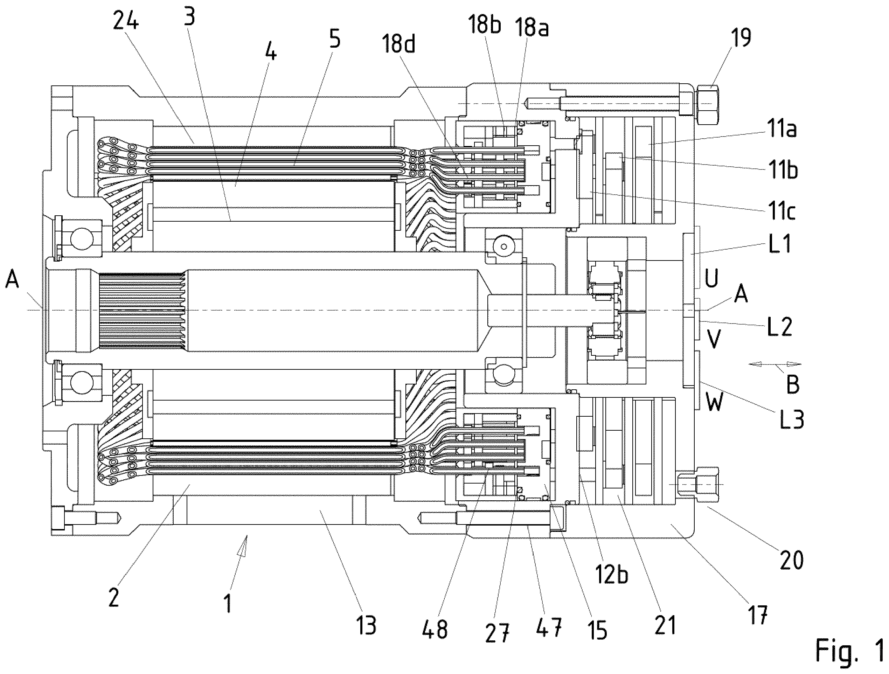

Fig. 1 zeigt eine Schnittansicht einer elektrischen Maschine 1 mit einem Stator 2, einem Läufer 3 und einer aus mehreren starren Wicklungsstücken 5 gebildeten Wicklung 4. Die starren Wicklungsstücke 5 sind dabei als Hohlleiter ausgebildet und umfassen einen durchgehenden Kanal 9, durch den ein Kühlmittel geleitet wird, um die elektrische Maschine 1 zu kühlen. Die einzelnen Wicklungsstücke 5 sind dabei hydraulisch parallelgeschaltet und jeweils Teil eines Kühlkreislaufs der elektrischen Maschine 1.

Im Ausführungsbeispiel von Fig. 1 sind die Wicklungsstücke 5 jeweils einzeln in Nuten 24 des Stators 2 der elektrischen Maschine 1 angeordnet. Der Querschnitt der Wicklungsstücke 5 ist dabei an den Querschnitt der Nuten 24 angepasst, so dass sie im Wesentlichen spielfrei in den Nuten 24 aufgenommen werden. Alternativ könnte aber auch mehr als ein Wicklungsstück 5 pro Nut 24 vorgesehen sein.

Als Kühlmittel kann beispielsweise ein Öl, Therminol, Galden oder Kohlstoffdioxid verwendet werden.

Die elektrische Maschine 1 umfasst ferner ein Gehäuse 13 mit einem Gehäusedeckel 17, in dem sämtliche Komponenten der elektrischen und hydraulischen Anschlussanordnung untergebracht sind.

Außerdem sind Befestigungsmittel 47 vorgesehen, die hier als Schrauben ausgeführt sind, mit denen das Gehäuse verschraubt ist. Die elektrische Maschine ist dabei so konstruiert, dass durch das Anziehen der Befestigungsmittel gleichzeitig auch ein hydraulisches Anschlussteil 15 gegen eine Dichtung 27 gepresst wird. Aufbau und Funktion der genannten Bauelemente wird im Folgenden noch eingehend erläutert.

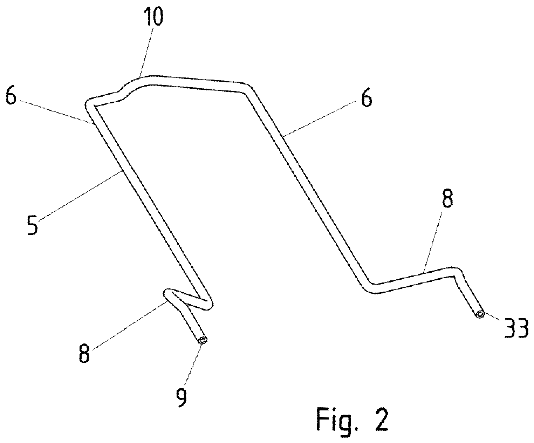

Bei der in Fig. 1 dargestellten elektrischen Maschine 1 sind die Wicklungsstücke 5 als sogenannte Hairpins ausgeführt, wie sie beispielshaft in Fig. 2 dargestellt sind. Das in Fig. 2 gezeigte Wicklungsstück 5 umfasst zwei im Wesentlichen parallel verlaufende Schenkel 6 und einen gekrümmten Übergangsbereich 10, der die beiden Schenkel 6 miteinander verbindet. Das dargestellte Hairpin ist als Hohlleiter ausgebildet und umfasst einen durchgehenden Kanal 9, der von einem Endabschnitt 8 zum anderen Endabschnitt 8 durchgeht und durch den ein Kühlmittel geleitet wird, um die Wicklung 4 der elektrischen Maschine 1 im Betrieb zu kühlen. Das Hairpin ist an seinen stirnseitigen Enden 33 jeweils offen. Eines der stirnseitigen Enden 33 kann somit als Kühlmitteleinlass und das andere stirnseitige Ende 33 als Kühlmittelauslass verwendet werden.

Das in Fig. 2 dargestellte Wicklungsstück 5 kann beispielsweise aus Kupfer hergestellt sein. An seiner Außenfläche ist es vorzugsweise mit einer elektrisch isolierenden Schicht versehen.

Der Wicklungsstück 5 kann z. B. ein rundes oder eckiges Profil aufweisen. Das Wicklungsstück 5 kann auch an verschiedenen Abschnitten ein unterschiedliches Profil aufweisen. Gemäß einer bevorzugten Ausführungsform ist das Profil an den Endabschnitten rund.

Die in Fig. 1 dargestellte elektrische Maschine 1 ist dreiphasig ausgeführt und hat entsprechend drei externe Phasenanschlüsse L1, L2 und L3, an denen die elektrischen Phasen U, V und W anliegen. Die Wicklung 4 der elektrischen Maschine 1 ist hier so ausgeführt, dass sie für jede elektrische Phase U, V und W jeweils mehrere parallel geschaltete Spulen umfasst. Die einzelnen Wicklungsstücke 5 sind entsprechend so elektrisch verschaltet, dass jeweils mehrere Wicklungsstücke seriell zu einer Spule verschaltet sind, und mehrere solcher Spulen, die derselben elektrischen Phase U, V, W angehören, parallelgeschaltet sind. Gemäß einer speziellen Ausführungsform der Erfindung kann jede Phase U, V, W beispielsweise acht parallele Spulen umfassen. Die Wicklung 4 der elektrischen Maschine kann natürlich auch mehr oder weniger parallel geschaltete Spulen aufweisen.

Die Endabschnitte 8 derjenigen Wicklungsstücke 5, die am Phasenpotential U, V, W liegen, sind über eine elektrische Kontaktanordnung, auf die im Folgenden noch näher eingegangenen werden wird, mit dem jeweils zugehörigen externen Phasenanschluss L1, L2 oder L3 verbunden.

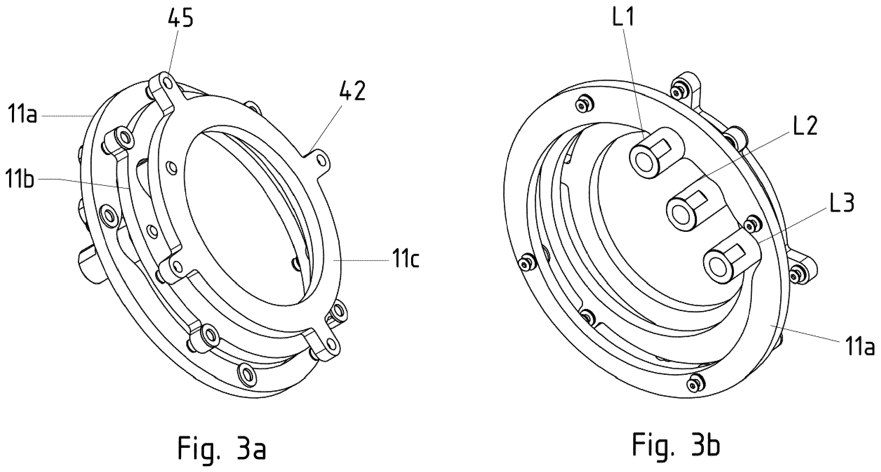

Die genannte elektrische Kontaktanordnung umfasst bei dieser Ausführungsform einen Satz aus drei Verteilerelementen 11a, 11b, 11c, wie er beispielhaft in den Figuren 3a, 3b dargestellt ist. Jedes der Verteilerelemente 11a, 11b, 11c ist an einem der externen Phasenanschlüsse L1, L2, L3 elektrisch angeschlossen. Im dargestellten Ausführungsbeispiel ist das Verteilerelement 11a mit dem Phasenanschluss L1, das Verteilerelement 11b mit dem Phasenanschluss L2 und das Verteilerelement 11c mit dem Phasenanschluss L3 elektrisch verbunden. Die drei Verteilerelemente 11a bis 11c sind in Axialrichtung B der elektrischen Maschine 1 nebeneinander angeordnet und elektrisch voneinander isoliert.

Jedes Verteilerelement 11a, 11b, 11c umfasst ferner mehrere Aufnahmen 45 für elektrische Verbindungselemente 12a - 12d, die über den Umfang des Verteilerelements vorzugsweise gleichmäßig verteilt angeordnet sind. Die einzelnen Verteilerelemente 11a, 11b, 11c dienen im Wesentlichen dazu, den an den Phasenanschlüssen L1, L2, L3 zugeführten Strom über den Umfang der elektrischen Maschine 1 zu verteilen und zu den nachfolgenden Kontaktringen 18a - 18d zu leiten. Jedes der Verteilerelemente 11a - 11d ist über mehrere elektrische Verbindungselemente 12a - 12d mit jeweils einem Kontaktring 18a - 18d elektrisch verbunden.

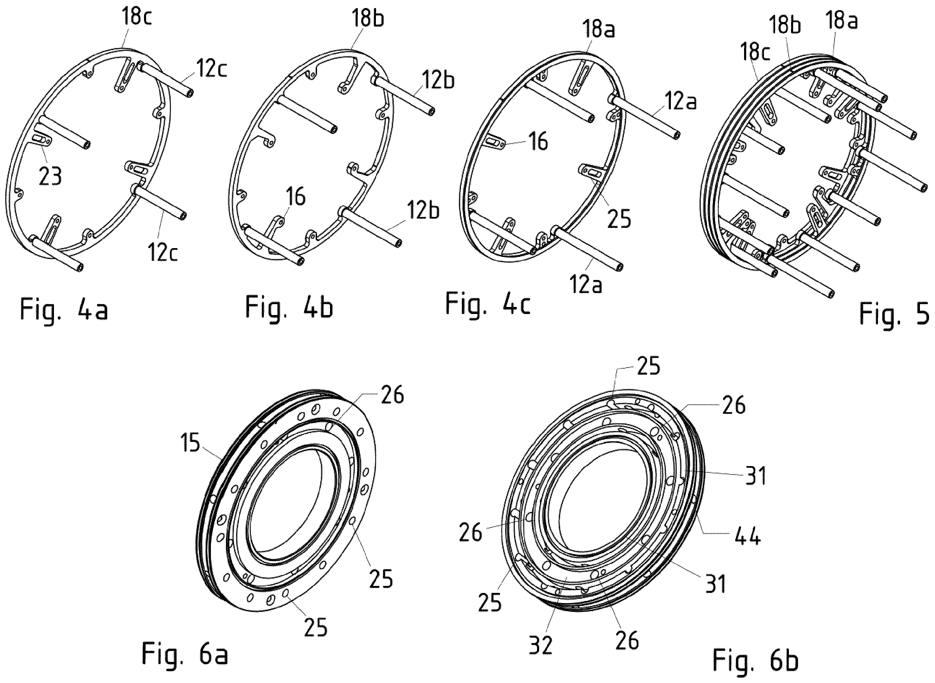

Die Figuren 4a - 4c zeigen verschiedene Kontaktringe 18a - 18c gemäß einer speziellen Ausführungsform der Erfindung. Der Kontaktring 18a ist dabei mit dem zugehörigen Verteilerelement 11a und dem Phasenanschluss L1, der Kontaktring 18b mit dem zugehörigen Verteilerelement 11b und dem Phasenanschluss L2 und der Kontaktring 18c mit dem zugehörigen Verteilerelement 11c und dem Phasenanschluss L3 elektrisch verbunden.

Wie in den Figuren 4a - 4c zu erkennen ist, sind die elektrischen Verbindungselemente 12a - 12c jeweils an den zugehörigen Kontaktringen 18a - 18c befestigt und über den Umfang der Kontaktringe 18a - 18c gleichmäßig verteilt. Im montierten Zustand liegen die Kontaktringe 18a - 18c im Wesentlichen quer zur Axialrichtung B der elektrischen Maschine 1, und die elektrischen Verbindungselemente 12a - 12c verlaufen im Wesentlichen in Axialrichtung B.

Jeder der elektrischen Kontaktringe 18a - 18c umfasst mehrere Arme 23 zum elektrischen Kontaktieren von Endabschnitten 8 derjenigen Entwicklungsstücke 5, die an einer bestimmten elektrischen Phase U, V oder W liegen. Im vorliegenden Ausführungsbeispiel umfasst jeder Kontaktring 18a - 18c acht Arme 23, um damit jeweils eines von acht Wicklungsstücken 5 von acht parallel geschalteten Spulen zu kontaktieren. Die Arme 23 haben eine unterschiedliche Länge, um radial weiter innenliegende oder weiter außenliegende Endabschnitte 8 der Wicklungsstücke 5 zu kontaktieren. Jeder Arm 23 umfasst eine Kontaktöffnung 16, durch die der Endabschnitt 8 eines Wicklungsstücks 5 hindurch gesteckt und festgelötet ist.

Bei einer elektrischen Maschine 1 gemäß der Erfindung sind die Endabschnitte 8 der einzelnen Wicklungsstücke 5 vorzugsweise in mehreren, insbesondere kreisförmigen, Reihen angeordnet. Die Endabschnitte 8 der Wicklungsstücke 5 sind vorzugsweise parallel nebeneinander angeordnet und zeigen vorzugsweise alle in Axialrichtung B. Die Endabschnitte 8 enden vorzugsweise alle auf gleicher axialer Höhe, d.h. etwa in derselben Ebene. Dies erleichtert die elektrische Kontaktierung der einzelnen Wicklungsstücke 5 sowie deren hydraulische Anbindung an den Kühlkreislauf.

Fig. 5 zeigt die Kontaktringe 18a - 18c der Fig. 4a - 4c in einem zusammengebauten Zustand. Wie zu erkennen ist, sind die einzelnen Kontaktringe 18a - 18c in Axialrichtung B der elektrischen Maschine 1 nebeneinander angeordnet und dabei elektrisch voneinander isoliert.

Neben dem elektrischen Anschluss einzelner Wicklungsstücke 5 an den jeweils zugehörigen externen Phasenanschluss L1, L2, L3 ist es auch erforderlich, bestimmte Wicklungsstücke 5 miteinander in Serie zu verschalten, um die Spulen der Wicklung 4 der elektrischen Maschine 1 zu bilden. Zum Zwecke der seriellen Verschaltung können beispielsweise einfache elektrische Leiter verwendet werden, die zwischen die gewünschten Wicklungsstücke gelötet werden.

Gemäß einer bevorzugten Ausführungsform der Erfindung ist jedoch eine elektrische Kontaktscheibe 39 mit elektrischen Verbindern 40 vorgesehen, wie sie in Fig. 13 dargestellt ist. Bevor auf diese Kontaktscheibe 39 Bezug genommen wird, wird im Folgenden zunächst noch auf den hydraulischen Anschluss der einzelnen Wicklungsstücke 5 eingegangen:
Fig. 6a und 6b zeigen verschiedene perspektivische Ansichten eines hydraulischen Anschlussteils 15, an dem sämtliche Wicklungsstücke 5 hydraulisch angeschlossen sind. Das hydraulische Anschlussteil 15 umfasst mehrere Anschlüsse bzw. Anschlussöffnungen 46, die hier als umlaufende Kanäle 31 bzw. 32 ausgebildet sind, die jeweils mit mehreren der Wicklungsstücke 5 fluidtechnisch in Verbindung stehen und über die ein Kühlmittel in die Wicklungsstücke 5 eingespeist oder ein aus den Wicklungsstücken 5 austretendes Kühlmittel gesammelt wird.

Der mittlere Kanal 32 des hydraulischen Anschlussteils 15 ist hier breiter ausgebildet als die beiden anderen Kanäle 31 und überspannt zwei benachbart angeordnete ringförmige Reihen von Endabschnitten 8. Die beiden anderen Kanäle31, von denen einer radial außerhalb und einer radial innerhalb des mittleren Kanals 32 angeordnet ist, sind jeweils einer einzigen ringförmigen Reihe von Endabschnitten 8 zugeordnet. Sämtliche Kanäle 31, 32 verlaufen im Wesentlichen über den gesamten Umfang des hydraulischen Anschlussteils 15.

Im vorliegenden Fall wird das Kühlmittel über den mittleren Kanal 32 in die damit verbundenen Wicklungsstücke 5 eingespeist und tritt am anderen Ende der Wicklungsstücke 5 entweder in den außenliegenden oder in den innenliegenden Kanal 31 aus. Im Bereich des mittleren Kanals 32 sind verschiedene Durchlässe 26 vorgesehen, über die das Kühlmittel in den Kanal 32 eintritt. Darüber hinaus sind im Bereich des außenliegenden Kanals 31 mehrere Durchlässe 44 vorgesehen, über die das Kühlmittel aus dem hydraulischen Anschlussteil 15 austritt. Weitere Eintritts- oder Austrittsöffnungen können auch an der Umfangsfläche des hydraulischen Anschlussteils 15 vorgesehen sein.

Das hydraulische Anschlussteil 15 umfasst ferner mehrere Durchlässe 25, durch die die Verbindungselemente 12a - 12c zwischen den Kontaktringen 18a - 18c und den Verteilerelementen 11a - 11c hindurch gesteckt sind.

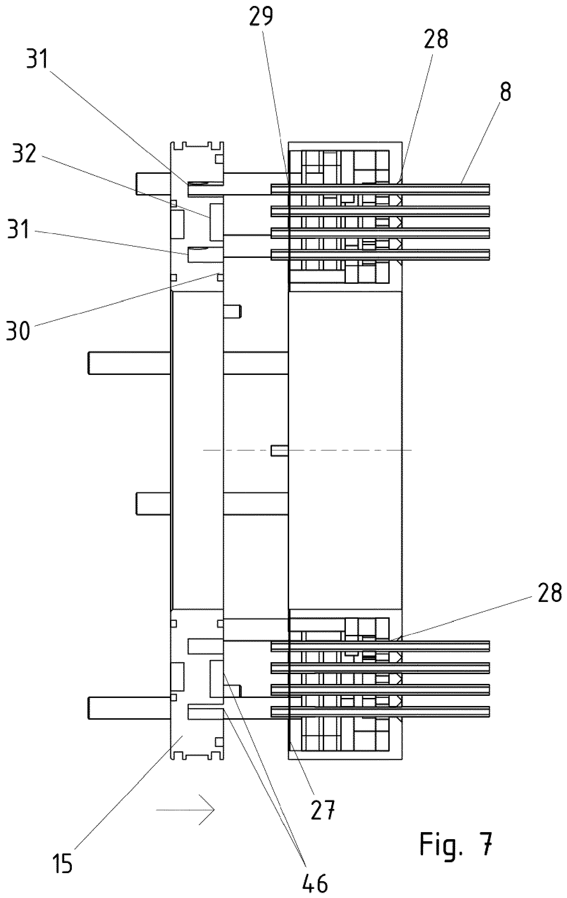

Wie in den Fig. 6a und 6b zu erkennen ist, sind die einzelnen Kanäle 31, 32 als ringförmige Nuten ausgebildet, die in einer in Richtung der Kontaktringe 18a - 18d zeigenden Fläche des hydraulischen Anschlussteils 15 angeordnet sind. Bei der ersten Ausführungsform der elektrischen Maschine 1 von Fig. 1 ragen die Endabschnitte 8 der einzelnen Wicklungsstücke 5 in diese Nuten hinein. Die Abdichtung der hydraulischen Anschlüsse der Wicklungsstücke 5 erfolgt dabei mittels einer Dichtung 27, wie sie beispielhaft in Fig. 7 dargestellt ist.

Fig. 7 zeigt eine Dichtung 27 mit mehreren Durchlässen, die zur Aufnahme jeweils eines Endabschnitts 8 eines Wicklungsstücks 5 ausgelegt sind. Die Endabschnitte 8 der Wicklungsstücke 5 sind jeweils formschlüssig in den Durchlässen 28 aufgenommen, wodurch die Dichtigkeit der Anordnung gewährleistet wird. Alternativ oder zusätzlich können auch eine oder mehrere Dichtungen (nicht gezeigt) an der Dichtung 27 vorgesehen sein.

Die Dichtung 27 und das hydraulische Anschlussteil 15 haben gegenüberliegende Flächen 29 bzw. 30, die komplementär (im vorliegenden Fall plan) ausgebildet und im zusammengebauten Zustand fest aneinander gepresst sind, wodurch die hydraulischen Anschlüsse der einzelnen Wicklungsstücke 5 abgedichtet werden.

Die Dichtung 27 kann beispielsweise als vorgefertigtes Bauteil, z.B. aus Kunststoff, hergestellt sein. Gemäß einer bevorzugten Ausführungsform der Erfindung umfasst die Dichtung 27 eine Vergussmasse, die in einen Raum 48, in welcher sich die Endabschnitte 8 der einzelnen Wicklungsstücke 5 befinden, gegossen wird und sich dann um die Endabschnitte 8 herum ausbreitet. Nach einiger Zeit erhärtet die Vergussmasse und bildet das eigentliche Dichtmittel, wie in Fig. 7 dargestellt ist. Die Endabschnitte 8 ragen dabei über die Fläche 29 der Dichtung 27 ein Stück weit hervor. Wenn nun das hydraulische Anschlussteil 15 in einem nächsten Arbeitsschritt auf die Dichtung 27 aufgesetzt wird, tauchen die Endabschnitte 8 in die verschiedenen Anschlussöffnungen 46 bzw. Kanäle 31, 32 ein. Über die stirnseitigen Ende 33 der einzelnen Wicklungsstücke 5 kann nun Kühlmittel in die Wicklungsstücke 5 eingespeist oder aus den Wicklungsstücken 5 austretendes Kühlmittel gesammelt werden. Sämtliche Wicklungsstücke 5 sind vorzugsweise im Kühlkreislauf hydraulisch parallelgeschaltet.

In dem in Fig. 1 dargestellten Ausführungsbeispiel der elektrischen Maschine 1 fließt das Kühlmittel über einen am Gehäuse 13 der elektrischen Maschine 1 vorgesehenen Kühlmitteleingang 19 in die elektrische Maschine 1 hinein und wird von dort über einen oder mehrere Kanäle dem hydraulischen Anschlussteil 15 zugeführt. Das Kühlmittel tritt dort von außen über die Durchlässe 26 in den mittleren Kühlmittelkanal 32 ein und wird dann in die damit fluidtechnisch verbundenen Endabschnitte 8 der Wicklungsstücke 5 eingespeist, läuft durch die einzelnen Wicklungsstücke 5 hindurch und tritt an den beiden Kanälen 31 wieder aus. Von dort wird das Kühlmittel in eine Kammer 21 geleitet, in der sich die Verteilerelemente 11a - 11c befinden. Das Kühlmittel tritt schließlich am Kühlmittelausgang 20 wieder aus der elektrischen Maschine 1 aus.

Der Querschnitt der Kanäle 31, 32 ist bei dem gezeigten Ausführungsbeispiel so gewählt, dass die Endabschnitte 8 der einzelnen Wicklungsstücke 5 in die Kanäle 31, 32 eintauchen können, ohne das hydraulische Anschlussteil 15 zu berühren. Zwischen den Endabschnitten 8 der Wicklungsstücke 5 und den Wänden der Kanäle 31, 32 verbleibt also ein Freiraum, wodurch die Endabschnitte 8 gegenüber dem hydraulischen Anschlussteil 15 elektrisch isoliert sind. Zusätzliche Isolationselemente können, müssen daher nicht unbedingt vorgesehen werden. Darüber hinaus wird es dadurch möglich, das hydraulische Anschlussteil 15 auch aus einem elektrisch leitfähigen Material, insbesondere Metall, herzustellen.

Des Weiteren kann auch eine Leistungselektronik der elektrischen Maschine 1 (nicht gezeigt) in den Kühlkreislauf eingebunden sein und durch das Kühlmittel gekühlt werden. Durch entsprechende Auslegung des Kühlmittelpfades durch die elektrische Maschine 1 können im Prinzip beliebige Komponenten, sofern gewünscht, gekühlt werden. Der Fachmann wird den Kühlmittelpfad gemäß den Anforderungen im Rahmen seines Fachwissens entsprechend anpassen.

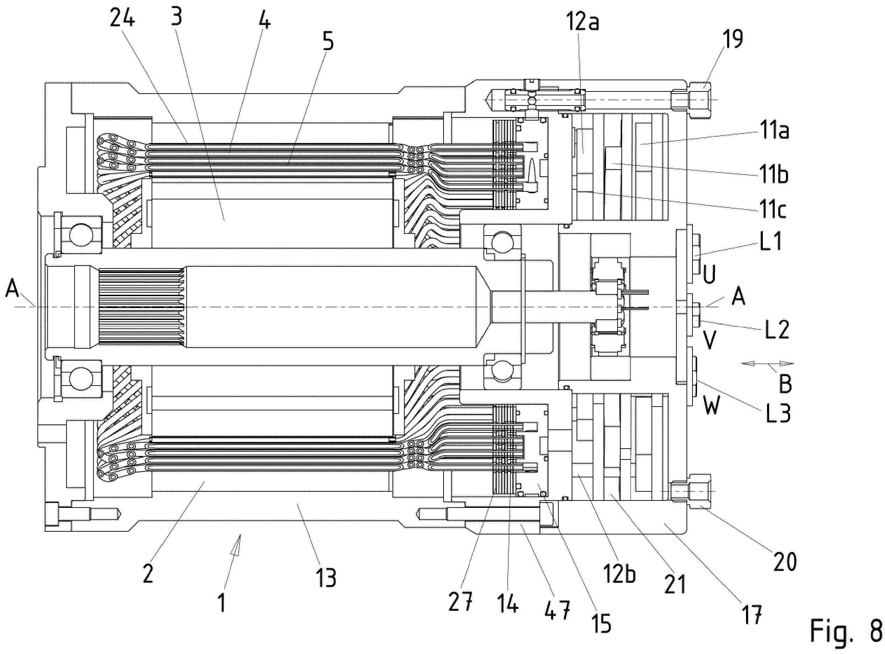

Fig. 8 zeigt eine Schnittansicht einer elektrischen Maschine 1 gemäß einer zweiten Ausführungsform der Erfindung, die in weiten Teilen identisch aufgebaut ist wie die elektrische Maschine 1 von Fig. 1. Im Unterschied zur ersten Ausführungsform sind die Kontaktringe 18a - 18b aber nicht als massive Metallringe ausgebildet, sondern bestehen aus einzelnen Leiterplatten 14a - 14d, die hier insgesamt mit dem Bezugszeichen 14 bezeichnet sind.

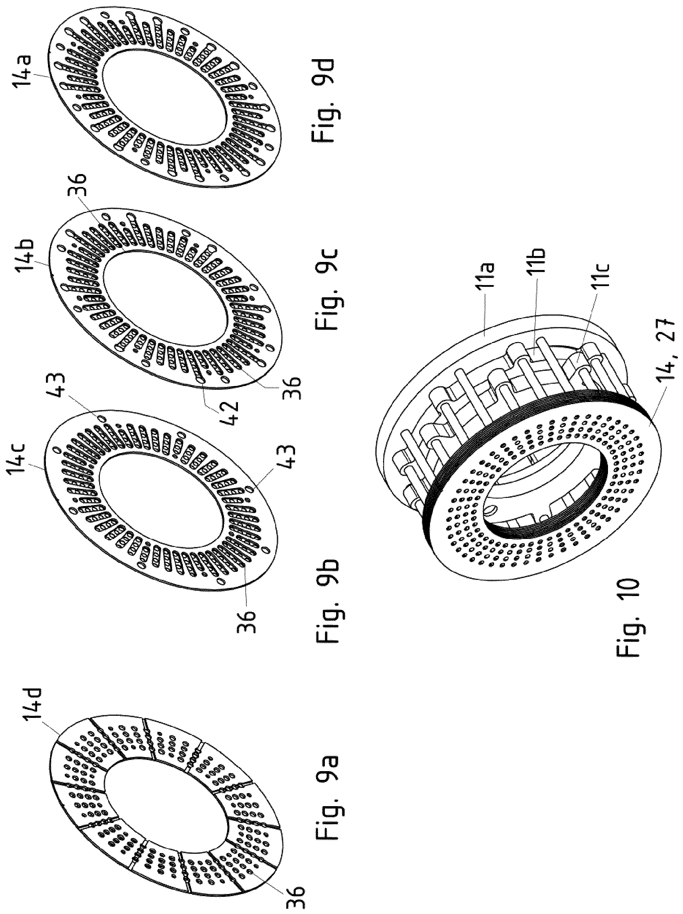

Die Fig. 9a - 9d zeigen perspektivische Ansichten der genannten Leiterplatten 14a - 14d. Einige davon werden von den zuvor beschriebenen Verteilerelementen 12a - 12c kontaktiert und sind somit jeweils mit einer der elektrischen Phasen U, V, W bzw. einem externen Phasenanschlüssen L1, L2, L3 elektrisch verbunden.

Die einzelnen Leiterplatten 14a - 14d umfassen vorzugsweise auch elektrische Leiterbahnen (nicht gezeigt), die bestimmte Wicklungsstücke 5 elektrisch miteinander verbinden und in Serie schalten, um die Spulen der Wicklung 4 der elektrischen Maschine 1 zu bilden.

Jede der Leiterplatten 14a - 14d umfasst ferner eine Vielzahl von Durchgangsöffnungen 36 für die Endabschnitte 8 der Wicklungsstücke 5. Da die Wicklungsstücke 5 durch alle Leiterplatten 14a - 14d hindurch gesteckt sind, ist die Anzahl der Durchgangsöffnungen 36 jeweils gleich groß. Die Endabschnitte 8 der einzelnen Wicklungsstücke 5 sind, je nach elektrischer Verschaltung, jeweils an einer oder mehreren der Leiterplatten 14a - 14d angelötet.

Im dargestellten Ausführungsbeispiel der Fig. 9 und 10 ist die Leiterplatte 14a dem hydraulischen Anschlussteil 15 gegenüberliegend angeordnet. Danach folgen die einzelnen Leiterplatten 14b, 14c und 14d. Alternativ können auch mehr als 4 Leiterplatten vorgesehen sein.

Im vorliegenden Fall wird die Leiterplatte 14a von den Verbindungselementen 12a kontaktiert, die Leiterplatte 14b von den Verbindungselementen 12b und die Leiterplatte 14c von den Verbindungselementen 12c. Die Leiterplatte 14d liegt auf dem Nullpotential. Wie in den Fig. 9b - 9d zu sehen ist, haben die einzelnen Leiterplatten 14a - 14c jeweils mehrere Durchgangsöffnungen 43, durch die die Verbindungselemente 12a und/oder 12b und/oder 12c hindurch verlaufen.

Aufgrund ihrer Anordnung im Leiterplattenstapel hat die Leiterplatte 14a die meisten Durchgangsöffnungen 43 und die Leiterplatte 14c die wenigsten Durchgangsöffnungen 43 für Verbindungselemente 12a - 12c.

Fig. 10 zeigt schließlich die gesamte Kontaktanordnung in einem zusammengebauten Zustand. Die einzelnen Leiterplatten 14a - 14d sind dabei in einem Leiterplattenstapel 14 angeordnet und über zugehörige Verbindungselemente 12a - 12c mit jeweils einem der elektrischen Verteilerelemente 11a - 11c elektrisch verbunden.

Die äußerste Leiterplatte 14a wird im zusammengebauten Zustand gegen das hydraulische Anschlussteil 15 gepresst und übernimmt damit gleichzeitig die Funktion der vorstehend beschriebenen Dichtung 27, die die hydraulischen Anschlüsse der einen Wicklungsstücke am hydraulischen Anschlussteil 15 abdichtet. Wahlweise kann auch eine andere Dichtung 27 zwischen die äußerste Leiterplatte 14a und das hydraulische Anschlussteil 15 eingesetzt bzw. eingegossen sein.

## Patentansprüche

1. Elektrische Maschine (1) mit:
- einem Läufer (3);
- einem Stator (2);
- mehreren als Hohlleiter ausgebildeten Wicklungsstücken (5), die jeweils Teil eines Kühlkreislaufs der elektrischen Maschine (1) sind,
- einem hydraulischen Anschlussteil (15), an dem mehrere der Wicklungsstücke (5) hydraulisch angeschlossen sind,
- einer Dichtung (27), die mehrere Durchlässe (28) aufweist, in denen jeweils ein Endabschnitt (8) eines der Wicklungsstücke (5) angeordnet ist,
- wobei die Wicklungsstücke (5) verschiedene Spulen einer Wicklung (4) der elektrischen Maschine (1) bilden;
- wobei mehrere externe Phasenanschlüsse (L1 - L3) vorgesehen sind, die mit den Wicklungsstücken (5) elektrisch verbunden sind; und
- und wobei das hydraulische Anschlussteil (15) und die Dichtung (27) gegenüberliegende Flächen (29, 30) aufweisen, welche aufeinander liegen, um eine Abdichtung der einzelnen Anschlüsse der Wicklungsstücke (5) am hydraulischen Anschlussteil (15) zu gewährleisten;
**dadurch gekennzeichnet, dass**
- das hydraulische Anschlussteil (15) und die Dichtung (27) als ringförmige Bauteile ausgeführt sind; und
- das hydraulische Anschlussteil (15) in seiner der Dichtung (27) gegenüberliegenden Fläche (30) wenigstens eine Nut aufweist, die mit mehreren der Wicklungsstücke (5) fluidtechnisch in Verbindung steht, so dass ein Kühlmittel in die Wicklungsstücke (5) eingespeist oder ein aus den Wicklungsstücken (5) austretendes Kühlmittel gesammelt werden kann.

2. Elektrische Maschine nach Anspruch 1,
**dadurch gekennzeichnet, dass**
Befestigungsmittel (47) vorgesehen sind, um das Anschlussteil (15) und die Dichtung (27) fest gegeneinander zu pressen.

3. Elektrische Maschine nach Anspruch 1 oder 2,
**dadurch gekennzeichnet, dass**
die Dichtung (27) aus einem elektrisch isolierenden Material hergestellt ist.

4. Elektrische Maschine nach einem der vorhergehenden Ansprüche,
**dadurch gekennzeichnet, dass**
die Dichtung (27) derart ausgelegt ist, dass zumindest eine erste Gruppe der Endabschnitte (8) von einer zweiten Gruppe der Endabschnitte (8) elektrisch isoliert ist.

5. Elektrische Maschine nach einem der vorhergehenden Ansprüche,
**dadurch gekennzeichnet, dass**
das hydraulische Anschlussteil (15) derart ausgebildet ist, dass die daran angeschlossenen Wicklungsstücke (5) hydraulisch parallelgeschaltet sind.

6. Elektrische Maschine nach einem der vorhergehenden Ansprüche,
**dadurch gekennzeichnet, dass**
die Endabschnitte (8) der einzelnen Wicklungsstücke (5) durch die Dichtung (27) hindurch verlaufen und in Richtung des hydraulischen Anschlussteils (15) vorragen und dort jeweils in eine Anschlussöffnung (46) des hydraulischen Anschlussteils (15) eintauchen.

7. Elektrische Maschine nach einem der vorhergehenden Ansprüche,
**dadurch gekennzeichnet, dass**
die in der Dichtung (27) vorgesehenen Durchlässe (28) so ausgelegt sind, dass die Endabschnitte (8) der Wicklungsstücke (5) an deren Umfang dicht aufgenommen werden.

8. Elektrische Maschine nach Anspruch 6,
**dadurch gekennzeichnet, dass**
die im hydraulischen Anschlussteil (15) vorgesehenen Anschlussöffnungen (46) einen größeren Querschnitt aufweisen als die Endabschnitte (8) der Wicklungsstücke (5) und dass die Endabschnitte (8) derart angeordnet sind, dass sie das hydraulische Anschlussteil (15) nicht berühren.

9. Elektrische Maschine nach einem der vorhergehenden Ansprüche,
**dadurch gekennzeichnet, dass**
die Endabschnitte (8) der Wicklungsstücke (5) in der Dichtung (27) verklebt sind.

## Claims

1. Electrical machine (1) with:
- a rotor (3);
- a stator (2);
- several winding pieces (5) designed as hollow conductors, each of which is part of a cooling circuit of the electrical machine (1),
- a hydraulic connection part (15) to which several of the winding pieces (5) are hydraulically connected,
- a seal (27) having a plurality of passages (28) in each of which an end section (8) of one of the winding pieces (5) is arranged,
- wherein the winding pieces (5) form different coils of a winding (4) of the electrical machine (1);
- wherein a plurality of external phase terminals (L1 - L3) are provided which are electrically connected to the winding pieces (5); and
- and wherein the hydraulic connection part (15) and the seal (27) have opposing surfaces (29, 30) which lie on one another in order to ensure a sealing of the individual connections of the winding pieces (5) on the hydraulic connection part (15);
**characterized in that**
- the hydraulic connection part (15) and the seal (27) are designed as annular components ; and
- the hydraulic connection part (15) has at least one groove in its surface (30) opposite the seal (27), which groove is fluidically connected to several of the winding pieces (5), so that a coolant can be fed into the winding pieces (5) or a coolant emerging from the winding pieces (5) can be collected .

2. Electrical machine according to claim 1,
**characterized in that**
Fastening means (47) are provided to press the connecting part (15) and the seal (27) firmly against each other.

3. Electrical machine according to claim 1 or 2,
**characterized in that**
the seal (27) is made of an electrically insulating material.

4. Electrical machine according to one of the preceding claims,
**characterized in that**
the seal (27) is designed such that at least a first group of the end sections (8) is electrically insulated from a second group of the end sections (8).

5. Electrical machine according to one of the preceding claims,
**characterized in that**
the hydraulic connecting part (15) is designed such that the winding pieces (5) connected thereto are hydraulically connected in parallel.

6. Electrical machine according to one of the preceding claims,
**characterized in that**
the end sections (8) of the individual winding pieces (5) extend through the seal (27) and project in the direction of the hydraulic connection part (15) and there each dip into a connection opening (46) of the hydraulic connection part (15).

7. Electrical machine according to one of the preceding claims,
**characterized in that**
the passages (28) provided in the seal (27) are designed so that the end sections (8) of the winding pieces (5) are tightly received at their circumference.

8. Electrical machine according to claim 6,
**characterized in that**
the connection openings (46) provided in the hydraulic connection part (15) have a larger cross-section than the end sections (8) of the winding pieces (5) and that the end sections (8) are arranged such that they do not touch the hydraulic connection part (15).

9. Electrical machine according to one of the preceding claims,
**characterized in that**
the end sections (8) of the winding pieces (5) are glued in the seal (27).

## Revendications

1. Machine électrique (1) avec :
- un rotor (3) ;
- un stator (2) ;
- plusieurs pièces d'enroulement (5) conçues comme des conducteurs creux, dont chacune fait partie d'un circuit de refroidissement de la machine électrique (1),
- une pièce de connexion hydraulique (15) à laquelle plusieurs des pièces d'enroulement (5) sont connectées hydrauliquement,
- un joint (27) comportant une pluralité de passages (28) dans chacun desquels est disposée une section d'extrémité (8) d'une des pièces d'enroulement (5),
- dans lequel les pièces d'enroulement (5) forment différentes bobines d'un enroulement (4) de la machine électrique (1) ;
- dans lequel une pluralité de bornes de phase externes (L1 - L3) sont prévues qui sont connectées électriquement aux pièces d'enroulement (5) ; et
- et dans lequel la partie de connexion hydraulique (15) et le joint (27) ont des surfaces opposées (29, 30) qui reposent l'une sur l'autre afin d'assurer une étanchéité des connexions individuelles des pièces d'enroulement (5) sur la partie de connexion hydraulique (15) ;
**caractérisé en ce que**
- la pièce de raccordement hydraulique (15) et le joint (27) sont conçus comme des composants annulaires ; et
- la partie de raccordement hydraulique (15) présente au moins une rainure dans sa surface (30) opposée au joint (27), laquelle rainure est reliée fluidiquement à plusieurs des pièces d'enroulement (5), de sorte qu'un liquide de refroidissement peut être introduit dans les pièces d'enroulement (5) ou qu'un liquide de refroidissement sortant des pièces d'enroulement (5) peut être collecté .

2. Machine électrique selon la revendication 1,
**caractérisé en ce que**
des moyens de fixation (47) sont prévus pour presser fermement la pièce de liaison (15) et le joint (27) l'un contre l'autre.

3. Machine électrique selon la revendication 1 ou 2,
**caractérisé en ce que**
le joint (27) est réalisé dans un matériau électriquement isolant.

4. Machine électrique selon l'une des revendications précédentes,
**caractérisé en ce que**
le joint (27) est conçu de telle sorte qu'au moins un premier groupe de sections d'extrémité (8) est isolé électriquement d'un deuxième groupe de sections d'extrémité (8).

5. Machine électrique selon l'une des revendications précédentes,
**caractérisé en ce que**
la partie de liaison hydraulique (15) est conçue de telle sorte que les pièces d'enroulement (5) qui y sont connectées sont reliées hydrauliquement en parallèle.

6. Machine électrique selon l'une des revendications précédentes,
**caractérisé en ce que**
les sections d'extrémité (8) des pièces d'enroulement individuelles (5) s'étendent à travers le joint (27) et font saillie en direction de la partie de raccordement hydraulique (15) et y plongent chacune dans une ouverture de raccordement (46) de la partie de raccordement hydraulique (15).

7. Machine électrique selon l'une des revendications précédentes,
**caractérisé en ce que**
les passages (28) prévus dans le joint (27) sont conçus de telle sorte que les sections d'extrémité (8) des pièces d'enroulement (5) soient reçues étroitement à leur circonférence.

8. Machine électrique selon la revendication 6,
**caractérisé en ce que**
les ouvertures de raccordement (46) prévues dans la partie de raccordement hydraulique (15) ont une section transversale plus grande que les sections d'extrémité (8) des pièces d'enroulement (5) et que les sections d'extrémité (8) sont disposées de telle sorte qu'elles ne touchent pas la partie de raccordement hydraulique (15).

9. Machine électrique selon l'une des revendications précédentes,
**caractérisé en ce que**
les sections d'extrémité (8) des pièces d'enroulement (5) sont collées dans le joint (27).
